# EUROPÄISCHE PATENTANMELDUNG

(11) **EP 1 190 896 A2**
(43) Veröffentlichungstag der Anmeldung: **27.03.2002**
(21) Anmeldenummer: 01121892.2
(22) Anmeldetag: 12.09.2001
(51) Int. Cl.: B60N 3/10

(54) **Dosenhalter für Fahrzeuge**

(30) Priorität: 18.09.2000 JP 2000282613
(71) Anmelder: NIFCO INC., Yokohama-shi, Kanagawa, 244 (JP)
(72) Erfinder: Tohru, Sambonmatsu, c/o NIFCO Inc., Yokohama-shi, Kanagawa (JP)
(74) Vertreter: Fuhlendorf, Jörn, Dipl.-Ing.

(57) **Zusammenfassung**

Auf der äußeren Seite eines kastenartigen Hauptkörpers (12) eines Dosenhalters (10) ist ein erster (36) und ein zweiter Führungsteil (38) vorgesehen. Von beiden Enden eines Deckelkörpers (16) verlängert sich eine hakenförmige Lagerplatte (40), an deren vorderen Ende (40A) und Beugung (40B) jeweils ein Zapfen (42, 44) nach innen ragend vorgesehen. Wenn die Zapfen (42, 44) von der Außenseite des Hauptkörpers (12) her in die Führungsvertiefung (34) eingreifen, ist somit der Zapfen (42) im ersten Führungsteil (36) und der Zapfen (44) im zweiten Führungsteil (38) verschiebbar. Damit öffnet bzw. verschließt der Deckelkörper (16) die die Dose haltende Aufnahme.

## Beschreibung

### Hintergrund der Erfindung

### Gebiet der Erfindung

Die Erfindung betrifft einen Behälterhalter mit einem den Behälter aufnehmenden Kastenkörper, an dem ein Deckelkörper zum Verschließen der Öffnung des Kastenkörpers angelenkt ist.

Wenn im Folgenden von Dosenhaltern statt von Behälterhaltern die Rede ist, versteht es sich, daß derartige Halter nicht nur für Dosen, sondern auch für andere Behälter bzw. Behältnisse, wie Becher, Gläser, Flaschen u.dgl. gedacht und einsetzbar sind.

### Stand der Technik

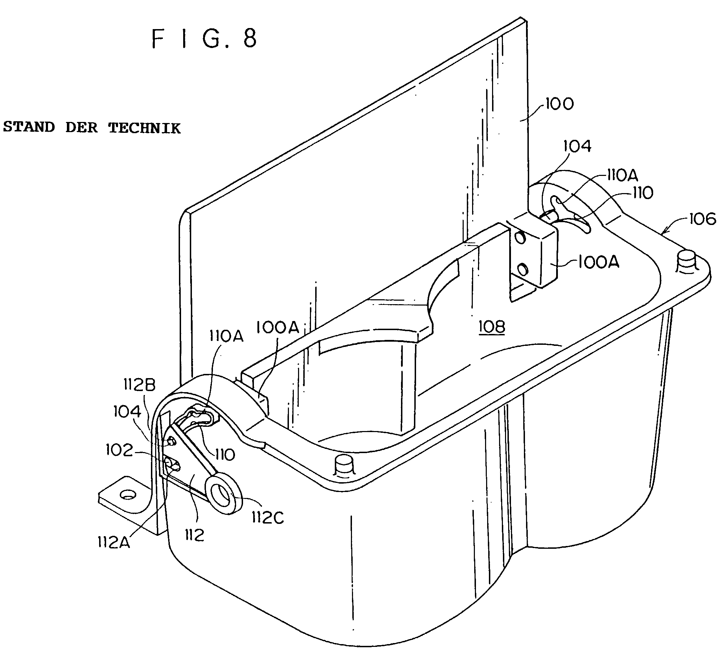

Dosenbalter auf der Mittelkonsole eines Kraftfarzeuges bestehen, wie in Fig.8 gezeigt, aus einem Hauptkörper 106 und einem Deckelkörper 100. Beidseits des Deckelkörpers 100 ist ein Paar Lagerungen 100A vorgesehen, an denen in einem vorgegebenen Abstand jeweils eine metallische Welle 102, 104 befestigt ist.

An dem Hauptkörper 106 ist wiederum eine Aufnahme 108 zum Halten der Dose vorgesehen, wobei die Aufnahme 108 durch den Deckelkörper 100 geöffnet bzw. verschlossen werden kann. Auf der Innenseite des Hauptkörpers 106 befindet sich ein Führungsloch 110 (gegebenenfalls in Form einer Mulde oder einer Durchbohrung), wobei die metallischen Wellen 102, 104 durch das Führungsloch 110 hindurchgehen und entlang diesem verschiebbar sind.

An Enden der metallischen Wellen 102, 104 ist jeweils ein Armelement 112 befstigbar, die auf der Außenseite des Hauptkörpers 106 angeordnet ist. An dem Armelement 112 sind eine Ausnehmung 112A, durch die die metallische Welle 102 hindurchgehen kann, eine Lagerung 112B, die die metallische Welle 104 gelenkig lagert, und eine Mittelachse 112C, um die das Armelement 112 geschwenkt wird, vorgesehen. Beim Öffnen des Deckelkörpers 100 verschieben sich somit die metallischen Wellen 102, 104 um die Mittelachse 112C entlang dem Führungsloch 110.

Hierbei ist neben dem Führungsloch 110 ein aus dem Führungsloch 110 ausgehendes bogenförmiges Abzweigungsloch 110A eingearbeitet. Im zugeklappenen Zustand des Deckelkörpers 100 liegt die metallische Welle 104 am Rand des Führungslochs 110, während sich die metallische Welle 102 am Rand des Abzweigungslochs 110A befindet.

Beim Aufklappen des Deckelkörpers 100 wird die metallische Welle 102 um die metallische Welle 104 entlang dem Abzweigungsloch 110A verschwenkt, und zwar unter Verschiebung entlang der Ausnehmung 112A des Armelements 112, bis sie in das Führungsloch 110 gelangt. Anschließend wird die metallische Welle 102 um die Mittelachse 112C zusammen mit der metallischen Welle 104 entlang dem Führungsloch 110 verschoben.

Auf diese Weise wird die Lagerachse während des Aufklappens des Deckelkörpers 100 gewechselt, so daß der Deckelkörper 100 auf der Hinterseite des Hauptkörpers 106 versteckt werden kann, um auch nach dem Aufklappen nicht hinderlich einzuwirken.

An der Aufnahme 108 des Hauptkörpers 106 kann man jedoch das Führungsloch 110 sowie die metallischen Wellen 102, 104 sehen, was in ästhetischer Hinsicht nachteilig wirkt. Ferner kann das Schmierfett, das zur Verbesserung der Gleitbarkeit der im Führungsloch 110 verschobenen metallischen Wellen 102, 104 auf die Innenseite des Führungsloches 110 aufgebracht wird, die Innenfläche des Hauptkörpers 106 beschmutzen.

### Offenbarung der Erfindung

Ausgehend davon liegt der Erfindung die Aufgabe zugrunde, einen Dosenhalter anzugeben, bei dem ohne das Führungsloch auf der Innenseite des Hauptkörpers der Deckelkörper klappbar an dem Hauptkörper angebracht wird.

### Mittel zur Lösung der Aufgabe

Bei einem Dosenhalter ist erfindungsgemäß der Deckelkörper zum Verschließen der Öffnung klappbar an dem die Dose aufnehmenden Kastenkörper angebracht. Von beiden Enden dieses Deckelkörpers verlängert sich eine Lagerplatte, aus der ein Eingriffsvorsprung nach innen vorsteht. Auf der Außenseite des Kastenkörpers ist eine Vertiefung vorgesehen, in die der Eingriffsvorsprung von der äußeren Seite des Kastenkörpers her schwenkbar eingreift.

Aufgrund diese Vertiefung auf der Außenseite des Kastenkörpers, in die der Eingriffsvorsprung von der äußeren Seite des Kastenkörpers her eingreift, entfällt im Gegensatz zum Stand der Technik das Führungsloch auf der Innsenseite des Hauptkörpers, das ästhetisch störend wirken kann. Wird auf die Innenfläche der Vertiefung das Schmierfett zur Verbesserung der Gleitbarkeit des Eingriffsvorsprungs aufgebracht, ist eine Beschmutzung der Innsenseite des Kastenkörpers ausgeschlossen. Vorteilhaft handelt es sich beim Eingriffsvorsprung um zwei in einem vorgegebenen Abstand voneinander auf der Lagerplatte angeordnete Zapfen. Hierbei setzt sich die Vertiefung aus einem ersten Führungsteil und einem zweiten Führungsteil zusammen, wobei der erste Führungsteil in der Endlage des einen Zapfens dafür sorgt, daß der Deckelkörper um diesen Zapfen verschwenkbar ist, und nach dem Öffnen des Deckelkörpers um einen vorgegebenen Winkel den einen Zapfen zum unteren Bereich des Kastenkörpers führt.

Demgegenüber führt der zweite Führungsteil mit der Schwenkbewegung des Deckelkörpers um den einen Zapfen den weiteren Zapfen zum unteren Bereich des Kastenkörpers und dann mit der Verschiebebewegung des einen Zapfens entlang dem ersten Führungsteil den weiteren Zapfen noch weiter zum unteren Bereich des Kastenkörpers, so daß der Deckelkörper auf der Hinterseite des Kastenkörpers versteckt wird.

Auf diese Weise wird nach dem Öffnen des Deckelkörpers um einen vorgegebenen Winkel die Schwenkachse der Lagerplatte gewechselt und der Deckelkörper auf der Hinterseite des Kastenkörpers versteckt, so daß der aufgeklappte Deckelkörper nicht hinderlich einwirkt.

Vorzugsweise ist ferner vorgesehen, daß mittels einer Beaufschlagungseinrichtung die Lagerplatte gedrückt, wodurch das Moment zum Verschwenken des Deckelkörpers entsteht. An dem zweiten Führungsteil ist andererseits ein Wendpunkt vorgesehen, der dazu dient, daß die Richtung des durch die Beaufschlagungseinrichtung erzeugten Moments gewechselt wird, wenn der weitere Zapfen den Scheitel überschreitet.

Wenn somit der weitere Zapfen den Wendepunkt passiert, wird aufgrund des sich aus der Beaufschlagungseinrichtung resultierenden Moments der Deckelkörper selbsttätig geöffnet oder verschlossen.

Vorzugsweise ist ferner vorgesehen, daß die Beaufschlagungseinrichtung eine Torsionsfeder ist, wobei das eine Ende der Torsionsfeder auf der äußeren Fläche des Kastenkörpers fixiert ist, während das andere Ende in einem an der Lagerplatte gebildeten Schlitz eingreift. Auf diese Weise läßt sich die Torsionsfeder ohne weiteres an dem Hauptkörper befestigen, indem das andere Ende lediglich in dem Schlitz verriegelt wird.

Vorzugsweise ist ferner vorgesehen, daß die Lagerplatte an dem Eingriffsvorsprung angeformt wird. Dies ergibt eine gegenüber dem Stand der Technik kleinere Anzahl der Bauteile, was zur Kostensenkung führt.

Vorzugsweise ist ferner vorgesehen, daß auf der Rückseite des Deckelkörpers eine Sicherungsplatte schwenkbar befestigt ist, wobei durch die gekippte Sicherungsplatte die in dem Kastenkörper aufgenommene Dose seitlich gestützt. Beim Aufrechtstehen wird die Sicherungsplatte nach Überschreiten des Scheitels des Aufnahmevorsprungs derart fixiert, daß sie an der Rückseite des Deckelkörpers anliegt.

Auf diese Weise läßt sich die Sicherungsplatte im nicht benutzten Zustand mit Hilfe des Aufnahmevorsprungs so fixieren, daß sie an der Rückseite des Deckelkörpers anliegt, wodurch die Schwingung des Fahrzeugs nicht zum Rütteln der Sicherungsplatte führen kann. Da es keiner besonderen Bauteile zum Befestigen der Sicherungsplatte braucht, senkt sich die Anzahl der Bauteile.

Kurze Erläuterung der Zeichnung
- Fig. 1: zeigt den auf der Mittelkonsole angeordneten Dosenhalter gemäß vorliegender Ausführung in Schrägansicht.
- Fig. 2: zeigt in Schrägansicht die an dem Dosenhalter gemäß vorliegender Ausführung angeordnete Sicherungsplatte im aufrechtstehenden Zustand.
- Fig. 3: zeigt in Schrägansicht die an dem Dosenhalter gemäß vorliegender Ausführung angeordnete Sicherungsplatte im gekippten Zustand.
- Fig. 4: zeigt eine Erläuterungsansicht für die in der Befestigungsvertiefung der Mittelkonsole fixierten Dosenhalter gemäß vorliegender Ausführung.
- Fig. 5: zeigt in Erläuterungsansicht den Öffnungs- oder Verschlußvorgang für den Deckelkörper des Dosenhalters gemäß vorliegender Ausführung.
- Fig. 6: zeigt in Erläuterungsansicht den Öffnungs- oder Verschlußvorgang für den Deckelkörper des Dosenhalters gemäß vorliegender Ausführung.
- Fig. 7A: zeigt schematisch eine Draufsicht auf die am Dosenhalter gemäß vorliegender Ausführung angeordnete Sicherungsplatte im gekippten Zustand.
- Fig. 7B: zeigt schematisch eine Draufsicht auf die am Dosenhalter gemäß vorliegender Ausführung angeordnete Sicherungsplatte im aufrechtstehenden Zustand.
- Fig. 8: zeigt eine Schrägansicht des herkömmlichen Dosenhalters.

### Beschreibung der vorteilhaften Ausführungsbeispiele

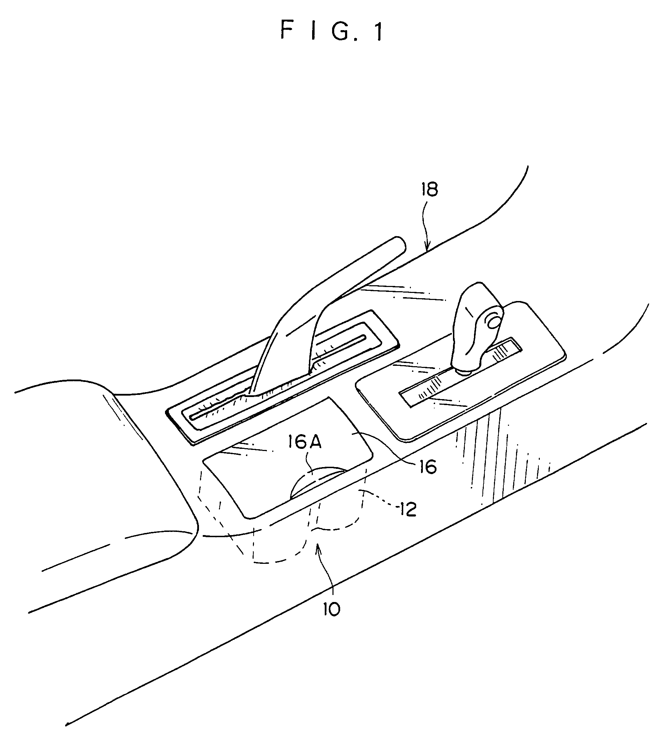

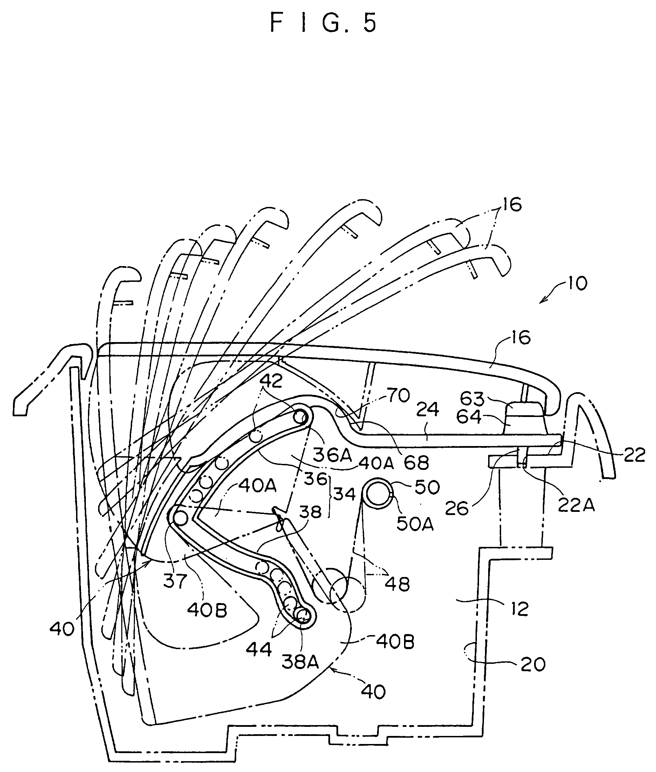

In Fig. 1 und 5 ist der erfindungsgemäße Dosenhalter 10 wiedergegeben. Der Dosenhalter 10 ist auf der Mittelkonsole 18 im Fahrzeug, die sich zwischen dem Fahrersitz und dem Beifahrersitz befindet, angeordnet und in der Befestigungsvertiefung 20 an der Mittelkonsole 18 aufnehmbar.

In dieser Befestigungsvertiefung 20 ist ein Absatz 22 vorgesehen, an dem ein Positionierloch 22A ausgebildet, in das ein an dem Flansch 24 des den Dosenhalter 10 darstellender Hauptkörpers (Kastenkörpers) vorgesehener Vorsprung 26 eingesetzt wird zur Positionierung des Hauptkörpers 12.

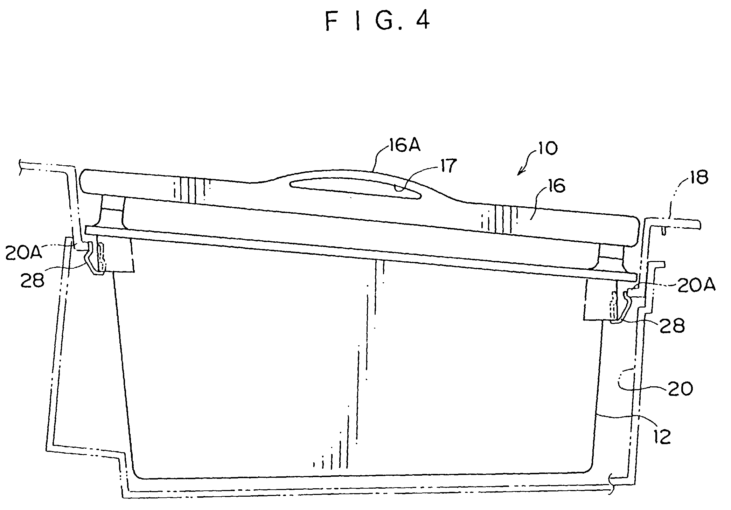

Wie in Fig. 4 gezeigt, ist auf beiden Seiten der Befestigungsvertiefung 20 ein einzugreifendes Mittel 20A vorgesehen, an dem die auf beiden Seiten des Hauptkörpers 12 vorgesehenen Klauen 28 angreifbar sind. In dem Zustand, in dem die Klaue 28 an dem einzugreifenden Mittel 20A angreift, wird der Dosenhalter 10 in der Befestigungsvertiefung 20 fixiert.

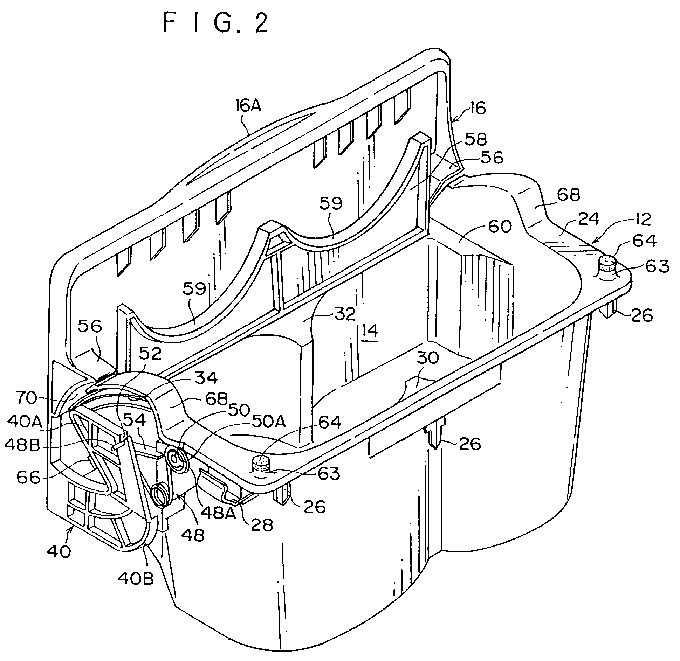

Wie in Fig. 2 gezeigt, besteht der Dosenhalter 10 aus dem Hauptkörper 12 und einem Deckelkörper 16, wobei am Hauptkörper 12 eine Aufnahme 14 vorgesehen, in der ein Behälter mit größerem Außendurchmesser, wie z.B. PET-Flachen, aufnehmbar ist. An dem Hauptkörper 12 ist der Deckelkörper 16 so angebracht, daß die Aufnahme 14 geöffnet und verschlossen werden kann.

In der längsmittleren Bereich der Innenseite des Hauptkörpers 12 sind nach innen vorstehende buckelartige Widerlager 30, 32 gegenüberliegend vorgesehen, durch die der aufgenommene Behälter vor Hinfallen geschutzt.

Wie in Fig. 5 gezeigt, ist auf der Außenseite des Hauptkörpers 12 eine Führungsvertiefung 34 (Vertiefung) vorgesehen. Diese Führungsvertiefung 34 ist etwa L-förmig ausgebildet und im wesentlichen in einen ersten Führungsteil 36, der sich vom Rand 36A bis zu einer Beugung 37 erstreckt, und in einen zweiten Führungsteil 38, der sich von der Beugung 37 bis zum Rand 38A erstreckt, aufzuteilen.

Ausgehend von beiden Enden des Deckelkörpers 16 verlängert sich jeweils eine hakenartige Lagerplatte 40. Aus dem vorderen Ende 40A sowie der Beugung 40B dieser Lagerplatte 40 sind Zapfen 42, 44 (Eingriffsvorsprung) nach innen ragend angeordnet.

Hierzu wird die Lagerplatte 40 durchgebogen, damit von der Außenseite des Hauptkörpers 12 her die Zapfen 42, 44 in die Führungsvertiefung 34 eingesezt werden sollen. Damit sind die Zapfen 42, 44 jeweils entlang der Führungsvertiefung 34 verschiebbar. Der Deckelkörper 16 öffnet bzw. verschließt die Aufnahme 14, indem der Zapfen 42 in dem ersten Führungsteil 36 und der Zapfen 44 in dem zweiten Führungsteil 38 verschoben wird.

Auf diese Weise erübrigt sich durch das Versehen der Führungsvertiefung 34 auf der Außenfläche des Hauptkörpers 12 sowie dadurch, daß von der Außenseite des Hauptkörpers 12 her die Zapfen 42, 44 in die Führungsvertiefung 34 eingreifen, im Gegensatz zum Stand der Technik ein Führungsloch auf der Innenfläche des Hauptkörpers, was zu keiner ästhetischer Beeinträchtigung führt.

Auch wenn auf die Führungsvertiefung 34 ein Schmierfett zur Verbesserung der Gleitbarkeit der Zapfen 42, 44 aufgebracht, ist die Beschmutzung der Innenfläche des Hauptkörpers 12 nicht zu befürchten. Außerdem führt die einteilige Ausbildung der Lagerplatte 40 und der Zapfen 42, 44 zu einer geringeren Anzahl der Bauteile und somit zur Kostensenkung.

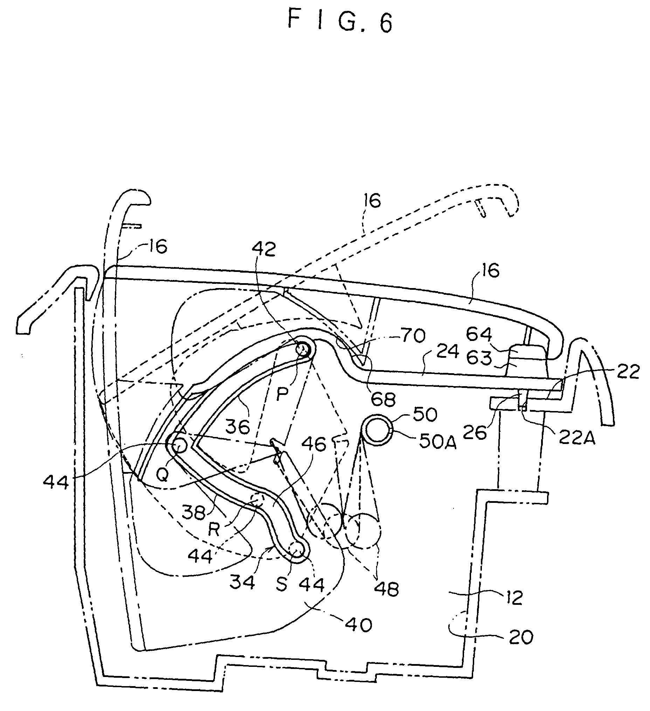

Wie in Fig. 6 durch die durchgezogene Linie gezeigt, befindet sich im zugeklappten Zustand des Deckelkörpers 16 der Zapfen 42 an dem Punkt P des ersten Führungsteils 36. Beim Aufklappen des Deckelkörpers 16 wird der Zapfen 44 um den Zapfen 42 entlang dem zweiten Führungsteil 38 vom Punkt Q bis zum Punkt R verschoben, wodurch der hintere Bereich des Deckelkörpers 16 zu den unteren Bereich des Hauptkörpers 12 heruntergezogen wird (durch die gestrichelte Linie angedeutet).

Auf diese Weise wird nach dem Aufklappen des Deckelkörpers 16 um einen vorgegebenen Winkel der Zapfen 42 entlang dem ersten Führungsteil 36 vom Punkt P nach dem Punkt Q verschoben. Mit dieser Verschiebung des Zapfens 42 wird der Zapfen 44 entlang dem zweiten Führungsteil 38 vom Punkt R bis zum Punkt S verschoben.

Damit wird der Deckelkörper 16, wie durch die strichpunktierte Linie angedeutet, auf der Hinterseite des Hauptkörpers 12 aufgenommen. Da also nach dem Aufklappen des Deckelkörpers 16 um einen vorgegebenen Winkel die Schwenkachse der Lagerplatte 40 gewechselt und somit der Deckelkörper 16 auf der Hinterseite des Hauptkörpers 12 aufgenommen werden kann, wirkt der aufgeklappte Deckelkörper 16 nicht mehr hinderlich ein.

Dadurch, daß die Zapfen 42, 44 auf verschiedene Wege, d.h. in dem ersten Führungsteil 36 und dem zweiten Führungsteil 38, verschoben werden, ist möglich, den Schwenkpunkt allmählich zu verlagern, wodurch die Bewegung des Deckelkörpers 16 gegenüber dem Stand der Technik glatter wird.

Der zweite Führungsteil 38 ist teils konvex und teils konkav und hat nämlich zwei Kreisbogen, deren Mittelpunkte einander umgewendet sind, wobei der Scheitel einen Wendepunkt 46 bildet. Wenn der Zapfen 44 diesen Wendepunkt 46 überschreitet, ändert sich die Richtung des Moments zum Verschwenken des Deckelkörpers 16, das sich daraus ergibt, daß die weiter unten erläuterte Torsionsfeder 48 als Beaufschlagungseinrichtung die Lagerplatte 40 beaufschlagt. Passiert der Zapfen 44 den Wendepunkt 46, wird somit der Deckelkörper 16 durch die Beaufschlagung der Torsionsfeder 48 selbsttätig geöffnet bzw. verschlossen.

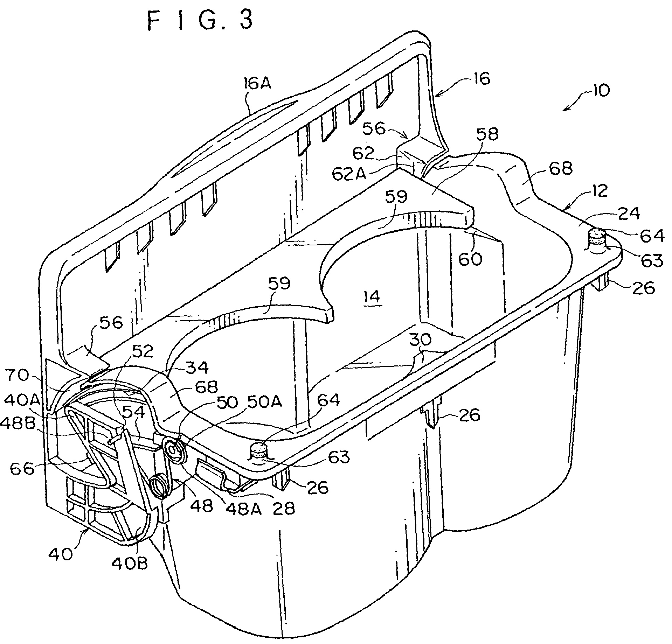

Im übrigen ragt aus der Außenfläche des Hauptkörpers 12, wie in Fig. 3 gezeigt, eine Nabe 50, an der das eine Ende der Torsionsfeder 48 verriegelbar ist. An dieses Ende der Torsionsfeder 48 ist ein Ring 48A mit einem etwas größeren Innendurchmesser als die Aussendurchmesser der Nabe 50 ausgebildet.

Am vorderen Ende der Nabe 50 steht ein Haltestück 50A vor, und der Ring 48A wird lediglich dadurch an der Nabe 50 verriegelt, daß er unter Anhängen an dem Haltestück 50A auf die Nabe 50 aufgesteckt wird.

An dem anderen Ende der Torsionsfeder 48 ist ein Haken 48B ausgebildet, der in einen Schlitz 52 (einzugreifendes Mittel) zwischen dem vorderen Ende 40A und der Beugung 40B der Lagerplatte 40 eingreifbar ist. Hierbei wird der Haken 48B durch die Beaufschlagung der Torsionsfeder 48 in Richtung auf den Boden des Schlitzes 52 gedrückt, um aus dem Schlitz 52 nicht herauszutreten.

Aufgrund der oben ausgeführten Anordnung läßt sich die Torsionsfeder 48 ohne weiteres anbringen, denn der Ring 48A wird unter Anhängen an dem Haltestück 50A auf die Nabe 50 aufgesteckt und verriegelt, und danach wird der Haken 48B lediglich durch Verschieben entsprechend der Formgebung des Schlitzes 52 verriegelt, so daß die Torsionsfeder 48 an der Lagerplatte 40 und dem Hauptkörper 12 befestigt wird.

Auf der äußeren Seite des Hauptkörpers 12 steht dabei eine Rippe 54, ausgehend von dem Punkt R (vgl. Fig.6) der Führungsvertiefung 34, in Richtung auf die Nabe 50 ab, und verhindert, daß der Haken 48B der Torsionsfeder 48, die durch Verschiebung der Lagerplatte 40 ausgedeht bzw. zusammengedrückt wird, aus dem Schlitz 52 austritt.

Wenn die Torsionsfeder 48 in dem Schlitz 52 verriegelt wird, befindet sich zwischen dem vorderen Ende der Rippe 54 und der Torsionsfeder 48 ein Spalt, der verhindert, daß durch Verlagerung der Lagerplatte 40 die Torsionsfeder 48 auf der Rippen 54 gleitet und dabei Geräusch herursacht.

Wie in Fig. 2, 3, 7A und 7B gezeigt, ist auf der Rückseite des Deckelkörpers 16 ein Paar Lagerungen 56 in Längsrichtung vorgesehen. Auf dieser Lagerung 56 ist jeweils ein aus beiden Enden der Sicherungsplatte 58 ragender Zapfen 58A gelenkig gelagert zum schwenkbaren Anbringen der Sicherungsplatte 58. An dem freien Ende der Sicherungsplatte 58 sind zwei bogenförmige Stützung 59 ausgebildet.

Durch die Widerlager 30, 32 wird die aufgenomme Dose, wie oben ausgeführt, vor Hinfallen geschutzt, wobei die Höhe des Widerlagers 32 kleiner ist als die des Widerlagers 30. In Anlehnung an diese Höhe des Widerlagers 32 ist an der schmalseitigen Innenfläche des Hauptkörpers 12 ein Auflagetisch 60 vorgesehen.

Beim zugeklappten Sicherungsplatte 58 liegt diese auf dem genannten Widerlager 32 und dem Auflagetisch 60 auf. In diesem Zustand verläuft die Sicherungsplatte 58 parallel zum Boden des Hauptkörpers 12, so daß die in der Aufnahme 14 gehaltene Dose seitlich von der Stützung 59 gestützt.

Diese Stützung 59 ragt weiter nach innen als das Widerlager 32 heraus. Ein Behälter mit größerem Aussendurchmesser, wie z.B. PET-Flachen, wird somit von den Widerlagern 30, 32 gestützt, und ein Behälter mit kleinerem Aussendurchmesser wird unter Zuklappen der Sicherungsplatte 58 von dem Widerlager 30 und der Stützung 59 gehalten.

An der Lagerung 56 sind dreieckige Aufnahmevorsprünge 62 gegenüberliegend ausgebildet. Der Abstand zwischen den Scheiteln 62A der gegenüberliegenden Aufnahmevorsprünge 62 ist etwas kürzer als die Länge der Sicherungsplatte 58.

An beiden Enden der Sicherungsplatte 58 ist rückseitig jeweils eine Abschrägung 58B gebildet. Überschreitet die Sicherungsplatte 58 den Scheitel 62A des Aufnahmevorsprungs 62, so liegt diese Abschrägung 58B an der Schrägfläche 62B des Aufnahmevorsprungs 62 an.

Zum Anliegen (Aufrechtstehen) der Sicherungsplatte 58 an der Rückseite des Deckelkörpers 16 gleitet die Seitenfläche der Sicherungsplatte 58 auf dem Aufnahmevorsprung 62 und beim Passieren des Scheitels 62A die Lagerung 56 aufweitet, um den Scheitel 62A zu überschreiten.

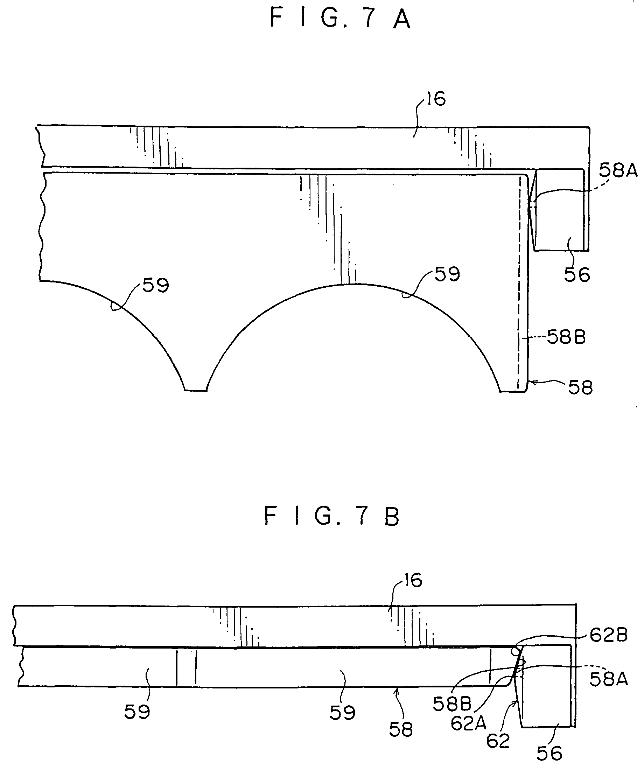

Hierbei klemmt die aufgeweitete Lagerung 56 aufgrund der Rückstellkraft die Sicherungsplatte 58 ein, so daß durch den Aufnahmevorsprung 62 die Sicherungsplatte 58 so fixiert wird, daß sie an der Rückseite des Deckelkörpers 16 anliegt. (vgl. Fig. 7B)

Auf diese Weise läßt sich die Sicherungsplatte 58 im nicht benutzten Zustand mit Hilfe des Aufnahmevorsprungs 62 so fixieren, daß sie an der Rückseite des Deckelkörpers 16 anliegt, wodurch die Schwingung des Fahrzeugs nicht zum Rütteln der Sicherungsplatte 58 führen kann. Da es keiner besonderen Bauteile zum Befestigen der Sicherungsplatte 58 braucht, senkt sich die Anzahl der Bauteile.

Bevor die Sicherungsplatte 58 den Scheitel 62A des Aufnahmevorsprungs 62 überschreitet, wird die Sicherungsplatte 58 von dem Aufnahmevorsprung 62 im Sinne des Zuklappens beaufschlagt. Der Rand der Sicherungsplatte 58 liegt somit auch dann an der Dose an und stützt diese, wenn die Dose gerade einen derartigen Aussendurchmesser hat, daß er zwischen der Großenordnung, bei der die Dose durch die Widerlager 30, 32 stützbar ist, und der Großenordnung, bei der die Dose durch die Stützung 59 und das Widerlager 30 stützbar ist, liegt. Daher ist der Umfang der stützbaren Dosenabmessung sehr groß.

Im übrigen ist, wie in Fig.1 und 4 gezeigt, auf der Oberfläche des Deckelkörpers 16, in Längsrichtung gesehen, im mittleren Bereich ein leicht konvexen Teil 16A vorgesehen, so daß die Länge der äußeren Umfangswand vergrößert ist. An dieser äußeren Umfangswand ist ein Griff 17 konkav vorgesehen, an dem man den verschlossenen Deckelkörper 16 ohne weiteres mit der Finger öffnen kann.

Wie in Fig.2 gezeigt, ist an dem Flansch 24 des Hauptkörpers 12 eine Polster-Aufnahme 63 vorstehend vorgesehen, in der ein Polster 64 aufgenommen ist.

Dieses Polster 64 dient dazu, den Stoß, der beim Anliegen der Rückseite des Deckelkörpers 16 an dem Hauptkörper 12 entsteht, wenn durch die Torsionsfeder 48 erzeugte Moment der Deckelkörper 16 verschlossen wird, zu absorbieren und an der inneren Umfangswand des Deckelkörpers 16 anzuliegen, damit der Deckelkörper 16 im verschlossenen Zustand nicht verschoben wird.

An der Beugung 40B der Lagerplatte 40 ist ein Schwamm 66 geklebt. Beim Verschließen des Deckelkörpers 16 kommt dieser Schwamm 66 zum Anlage an dem Flansch 24 und absorbiert somit den Stoß beim Verschließen des Deckelkörpers 16.

Auf diese Weise kommt die Lagerplatte 40 unter Vermittlung des Schwamms 66 zur Anlage an dem Flansch 24, wodurch der Stoß, der beim Verschließen des Deckelkörpers 16 durch Anschlag des Zapfens 44 an die Seitenwand des zweiten Führungsteils 38 an dem Punkt Q entsteht, gedämpft wird.

Auch auf der Rückseite des Hauptkörpers 12 ist ein Schwamm (nicht dargestellt) geklebt. Durch diesen Schwamm wird der Stoß, der beim Öffnen des Deckelkörpers 16 durch Anschlag desselben an die Rückseite des Hauptkörpers 12 entsteht, absorbiert.

Durch den Schwamm 66 und das Polster 64 wird also auch der anstoßende Laut, der beim Anschlag zwischen dem Hauptkörper 12 und dem Deckelkörper 16 oder zwischen der Lagerplatte 40 und dem Hauptkörper 12 entsteht, absorbiert.

Die vordere (z.B. in Fig. 5 und 6 rechte) Seite des Hauptkörpers 12 und somit auch die Vorderseite des Flansch 24 sind hierbei abgesenkt. Die hintere (z.B. in Fig. 5 und 6 linke) Seite des Flansches 24 beschreibt entsprechend der Formgebung des ersten Führungsteils 36 eine leichte Kurve, und der abgesenkte Bereich geht in die Anlagefläche 68 über.

Die Lagerung 56 des Deckelkörpers 16 stellt eine vom hinteren bis zum vorderen Bereich des Deckelkörpers 16 verlaufende leichte Schrägfläche 70 dar. Beim Verschließen des Deckelkörpers 16 liegt die Schrägfläche 70, wie in 6 gezeigt, an der Anlagefläche 68 an. Der verschlossene Deckelkörper 16 wird dadurch nicht verschoben.

In dieser Ausführung sind die Zapfen 42, 44 auf der Lagerplatte 40 angeordnet und entlang dem ersten 36 bzw. zweiten Führungsteil 38 verschiebbar. Die Zapfen müssen jedoch nicht immer entlang der Führung verschiebbar sein, sofern kein durchdringendes Führungsloch auf der äußeren Seite des Hauptkörpers vorgesehen ist. Demgemäß ist auch möglich, nur ein einziger Zapfen vorzusehen und so zu verfahren, daß der Zapfen in eine Vertiefung auf der Außenseite des Hauptkörpers schwenkbar eingreift.

In dieser Ausführung schließt sich der erste Führungsteil 36 direkt an den zweiten Führungsteil 38. Sofern beim Öffnen des Deckelkörpers 16 die Schwenkachse der Lagerplatte 40 gewechselt wird und somit der Deckelkörper 16 nicht hinderlich einwirkt, muß jedoch nicht immer notwendig, den ersten Führungsteil 36 direkt in Anschluß an den zweiten Führungsteil 38 vorzusehen.

In dieser Ausführung ist zwischen dem vorderen Ende 40A und der Beugung 40B der Lagerplatte 40 ein Schlitz 52 als einzugreifendes Mittel gebildet. Dies ist auch nicht immer notwendig, sofern die Torsionsfeder 48 leicht anbringbar ist.

Anstelle des Schlitzes 52 kann z.B. eine Bohrung in der Lagerplatte ausgebildet sein. Es ist auch denkbar, auf der Lagerplatte ein Stift o.dgl. vorzusehen, an den die Torsionsfeder angehängt werden kann. In diesem Fall muß jedoch auch die Formgebung des Hakens entsprechend angepaßt werden.

Aufgrund der oben ausgeführten Ausgestaltung entfällt im Gegensatz zum Stand der Technik das Führungsloch in der die Dose haltenden Aufnahme, das ästhetisch störend wirken kann. Wird auf die Innenseite der Vertiefung das Schmierfett zur Verbesserung der Gleitbarkeit des Eingriffsvorsprungs aufgebracht, ist eine Beschmutzung der Innsenfläche des Kastenkörpers ausgeschlossen.

Vorzugsweise ist vogesehen, daß nach dem Öffnen des Deckelkörpers um einen vorgegebenen Winkel der Schwenkpunkt der Lagerplatte gewechselt und der Deckelkörper auf der Hinterseite des Kastenkörpers versteckt wird, so daß der aufgeklappte Deckelkörper nicht hinderlich einwirkt.

Vorzugsweise ist vogesehen, daß, wenn der weitere Zapfen durch den Wendepunkt durchgeht, aufgrund des durch die Beaufschlagungseinrichtung erzeugten Moments der Deckelkörper selbsttätig geöffnet oder verschlossen. Vorteilhaft läßt sich die Torsionsfeder ohne weiteres an dem Hauptkörper befestigen, indem das andere Ende lediglich in dem Schlitz verriegelt wird.

Vorzugsweise ist vogesehen, daß sich die Sicherungsplatte im nicht benutzten Zustand mit Hilfe des Aufnahmevorsprungs so fixieren läßt, daß sie an der Rückseite des Deckelkörpers anliegt, wodurch die Schwingung des Fahrzeugs nicht zum Rütteln der Sicherungsplatte führen kann. Da es keiner besonderen Bauteile zum Befestigen der Sicherungsplatte braucht, senkt sich die Anzahl der Bauteile.

## Patentansprüche

1. Behälter (10), mit einem den Behälter aufnehmenden Kastenkörper und einem die Öffnung des Kastenkörpers (12) verschließbaren angelenkten Deckelkörper (16), **gekennzeichnet durch** eine Vertiefung (34) auf der äußeren Seite des Kastenkörpers (12), sich von beiden Enden des Deckelkörpers (16) verlängernde Lagerplatten (40) und mindestens einen Eingriffsvorsprung (42, 44), der an der Lagerplatte nach innen ragend vorgesehen ist und von der Außenseite des Kastenkörpers (12) her in die Vertiefung (34) schwenkbar eingreift.

2. Halter nach Anspruch 1, **dadurch gekennzeichnet, daß** es sich beim Eingriffsvorsprung um zwei in einem vorgegebenen Abstand voneinander auf der Lagerplatte (40) vorgesehene Zapfen (42, 44) handelt, wobei die Vertiefung (34) einen ersten Führungsteil (36), der in der Endlage des einen Zapfens (42) dafür sorgt, daß der Deckelkörper um diesen Zapfen verschwenkbar ist, und nach dem Öffnen des Deckelkörpers (16) um einen vorgegebenen Winkel den einen Zapfen zum unteren Bereich des Kastenkörpers (12) führt, und einen zweiten Führungsteil (38) aufweist, der mit der Schwenkbewegung des Deckelkörpers um den einen Zapfen (42) den weiteren Zapfen (44) zum unteren Bereich des Kastenkörpers (12) und dann mit der Verschiebebewegung des einen Zapfens (42) entlang dem ersten Führungsteil (36) den weiteren Zapfen (44) noch weiter zum unteren Bereich des Kastenkörpers (12) führt, so daß der Deckelkörper (16) auf der Hinterseite des Kastenkörpers (12) versteckt wird.

3. Halter nach Anspruch 2, **gekennzeichnet durch** eine Beaufschlagungseinrichtung (48), die **durch** Drücken der Lagerplatte (40) ein Moment zum Verschwenken des Deckelkörpers (16) erzeugt, und einen Wendepunkt bzw. Krümmungsbereich (46), der an dem zweiten Führungsteil (38) vorgesehen ist und, wenn der weitere Zapfen (42) den Scheitel überschreitet, die Richtung des **durch** die Beaufschlagungseinrichtung (48) erzeugten Moments ändert.

4. Halter nach Anspruch 3, **dadurch gekennzeichnet, daß** die Beaufschlagungseinrichtung eine Torsionsfeder (48) aufweist, und daß das erste Ende der Torsionsfeder (48) auf der äußeren Seite des Kastenkörpers (12) befestigt ist und das zweite Ende einen an der Lagerplatte (40) gebildeten Eingriffselement (52) ergreift.

5. Halter nach einem der Ansprüche 1 bis 4, **dadurch gekennzeichnet, daß** die Lagerplatte (40) und der Eingriffsvorsprung (42, 44) einteilig ausgebildet sind.

6. Halter nach Anspruch 1 oder 6, **dadurch gekennzeichnet, daß** der mindestens ein Eingriffsvorsprung (42, 44) in die auf der äußeren Seite des Kastenkörpers (12) vorgesehenen Vertiefung (34) schwenkbar eingreift.

7. Halter nach Anspruch 4, **dadurch gekennzeichnet, daß** das Eingriffselement ein Schlitz (52) ist.

8. Halter nach Anspruch 4, **dadurch gekennzeichnet, daß** das Eingriffelement eine Bohrung ist.

9. Halter nach Anspruch 4, **dadurch gekennzeichnet, daß** das Eingriffselement ein Zapfen mit einem Hakenteil ist, an dem das zweite Ende der Torsionsfeder (48) angehängt wird.

10. Halter nach einem der Ansprüche 1 bis 9, **gekennzeichnet durch** eine Sicherungsplatte (58), die auf der Rückseite des Deckelkörpers (16) schwenkbar angebracht und in gekipptem Zustand den im Kastenkörper (12) aufgenommenen Behälter seitlich stützt, und einen Aufnahmevorsprung (62), der die nach Überschreiten des Scheitels (62A) aufrecht stehende Sicherungsplatte (58) so fixiert, daß sie an der Rückseite des Deckelkörpers (16) anliegt.
